# EUROPEAN PATENT APPLICATION

(11) **EP 4 432 652 A1**
(43) Date of publication of application: **18.09.2024**
(21) Application number: 22892482.5
(22) Date of filing: 12.10.2022
(51) Int. Cl.: H04N 7/18, G05D 1/10

(54) **INFORMATION PROCESSING DEVICE, MOVABLE OBJECT, AND INFORMATION PROCESSING METHOD**

(30) Priority: 12.11.2021 JP 2021185014
(71) Applicant: Sony Group Corporation, Tokyo 108-0075 (JP)
(72) Inventor: TANAKA, Hirotaka, Tokyo 108-0075 (JP); SAWAHASHI, Ryota, Tokyo 108-0075 (JP); ISHII, Daisuke, Tokyo 108-0075 (JP); YAEGASHI, Taku, Tokyo 108-0075 (JP)
(74) Representative: D Young & Co LLP
(86) International application number: PCT/JP2022/038017
(87) International publication number: WO 2023/084982

(57) **Abstract**

An information processing apparatus according to an embodiment of the present disclosure includes a control unit that controls automatic following with respect to a target in a shooting region for a visible image to cause the target located in a position corresponding to a characteristic temperature distribution included in thermographic image data to be included in the shooting region. The thermographic image data is data obtained by shooting an image in response to a command to start the automatic following.

## Description

### Technical Field

The present disclosure relates to an information processing apparatus, a mobile body, and an information processing method.

### Background Art

In recent years, a mobile body (a so-call drone) that automatically follows a target, such as a person or an automobile, and shoots an image of the target is in practical use. This mobile body performs flying and shooting while avoiding obstacles and keeping a distance from a target constant by its autonomous locomotion. In this mobile body, target recognition to follow a target is performed by a stereo camera sensing it; therefore, in a case where its surroundings are too bright or too dark, or when something resembling the target is present in a sensing region, the mobile body may sometimes lose sight of the target.

To cope with such an issue, for example, both a stereo camera and an infrared camera may as well be used to track a target (see, for example, PTL 1).

### Citation List

### Patent Literature

PTL 1: Japanese Unexamined Patent Application Publication (Translation of PCT Application) No. 2017-204757

### Summary of Invention

However, in the method described in PTL 1, in a case where a target has a similar feature in both an image obtained by the stereo camera and an image obtained by the infrared camera, there is a possibility that something resembling the target may be falsely recognized as the target. Therefore, it is desirable to provide an information processing apparatus, a mobile body, and an information processing method that make it possible to reduce the possibility of falsely recognizing something resembling the target as the target.

An information processing apparatus according to an embodiment of the present disclosure includes a control unit that controls automatic following with respect to a target in a shooting region for a visible image to cause the target located in a position corresponding to a characteristic temperature distribution included in thermographic image data to be included in the shooting region. The thermographic image data is data obtained by shooting an image in response to a command to start the automatic following.

A mobile body according to an embodiment of the present disclosure includes a control unit that controls automatic following with respect to a target in a shooting region for a visible image to cause the target located in a position corresponding to a characteristic temperature distribution included in thermographic image data to be included in the shooting region. The thermographic image data is data obtained by shooting an image in response to a command to start the automatic following.

An information processing method according to an embodiment of the present disclosure includes the following procedure: controlling automatic following with respect to a target in a shooting region for a visible image to cause the target located in a position corresponding to a characteristic temperature distribution included in thermographic image data to be included in the shooting region, in which the thermographic image data is data obtained by shooting an image in response to a command to start the automatic following.

In the information processing apparatus, the mobile body, and the information processing method according to the embodiment of the present disclosure, automatic following with respect to a target in a shooting region for a visible image is controlled to cause the target located in a position corresponding to a characteristic temperature distribution included in thermographic image data to be included in the shooting region. Thus, for example, even in a case where something resembling the target is present in the shooting region for the visible image, the target has the characteristic temperature distribution that something resembling the target does not have, and therefore it is possible to reduce the possibility of falsely recognizing something resembling the target as the target.

### Brief Description of Drawings

[FIG. 1] FIG. 1 is a diagram illustrating a schematic configuration example of an information processing system according to an embodiment of the present disclosure.
[FIG. 2] FIG. 2 is a diagram illustrating an example of a characteristic temperature distribution generated by a cooling/heat-generating device in FIG. 1.
[FIG. 3] FIG. 3 is a diagram illustrating a schematic configuration example of the cooling/heat-generating device in FIG. 1.
[FIG. 4] FIG. 4 is a diagram illustrating a schematic configuration example of a tracking device in FIG. 1.
[FIG. 5] FIG. 5 is a diagram illustrating a schematic configuration example of a host device in FIG. 1.
[FIG. 6] FIG. 6 is a diagram illustrating an example of processing procedures in the information processing system in FIG. 1.
[FIG. 7] FIG. 7 is a diagram illustrating an example of processing procedures of automatic following in FIG. 6.
[FIG. 8] FIG. 8 is a diagram illustrating a situation in which multiple targets are present.
[FIG. 9] FIG. 9 is a diagram illustrating an example of processing procedures of the automatic following in the information processing system in FIG. 8.
[FIG. 10] FIG. 10 is a diagram illustrating an example of procedures for switching the following mode in the information processing system in FIG. 8.
[FIG. 11] FIG. 11 is a diagram illustrating an example of processing procedures in the event of a temperature abnormality in the information processing system in FIGs. 1 and 8.
[FIG. 12] FIG. 12 is a diagram illustrating a modification example of the schematic configuration of the tracking device in FIG. 4.
[FIG. 13] FIG. 13 is a diagram illustrating a modification example of the schematic configuration of the information processing system in FIG. 1.
[FIG. 14] FIG. 14 is a diagram illustrating a schematic configuration example of a command device that may be used instead of the cooling/heat-generating device in FIG. 1.

### Modes for Carrying Out the Invention

With reference to the drawings, an embodiment of the present disclosure will be described in detail below. It is to be noted that the description will be given in the following order.

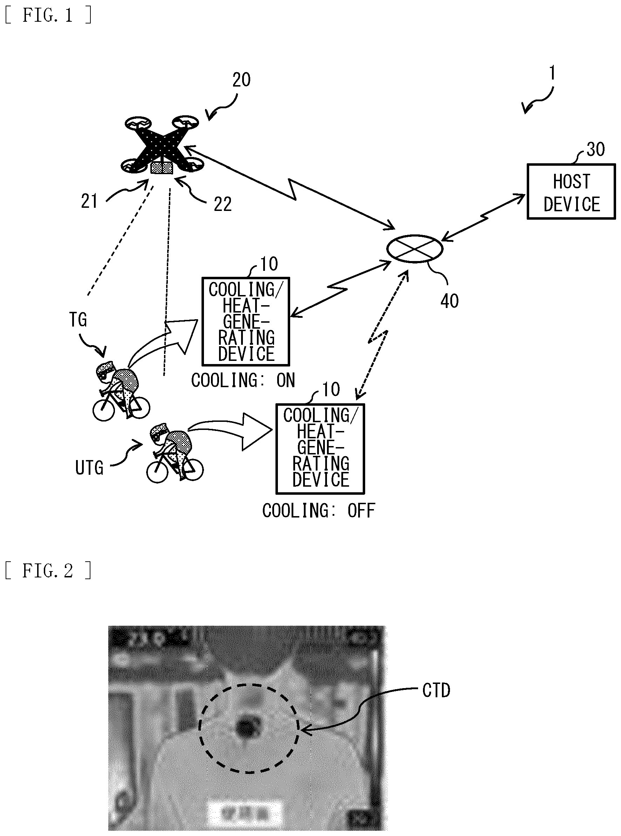

### 1. Embodiment (FIGs. 1 to 7)

### 2. Modification Examples

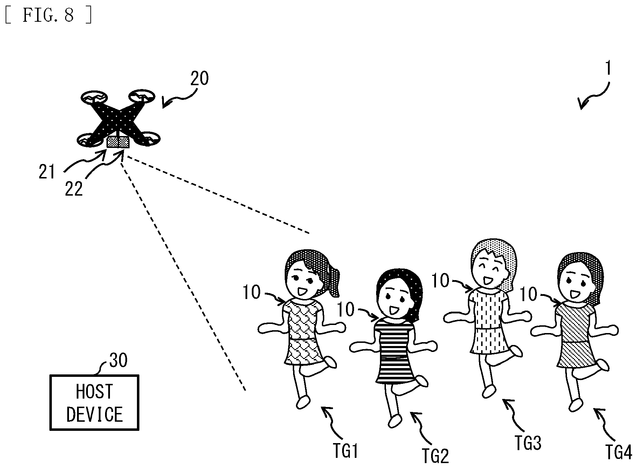

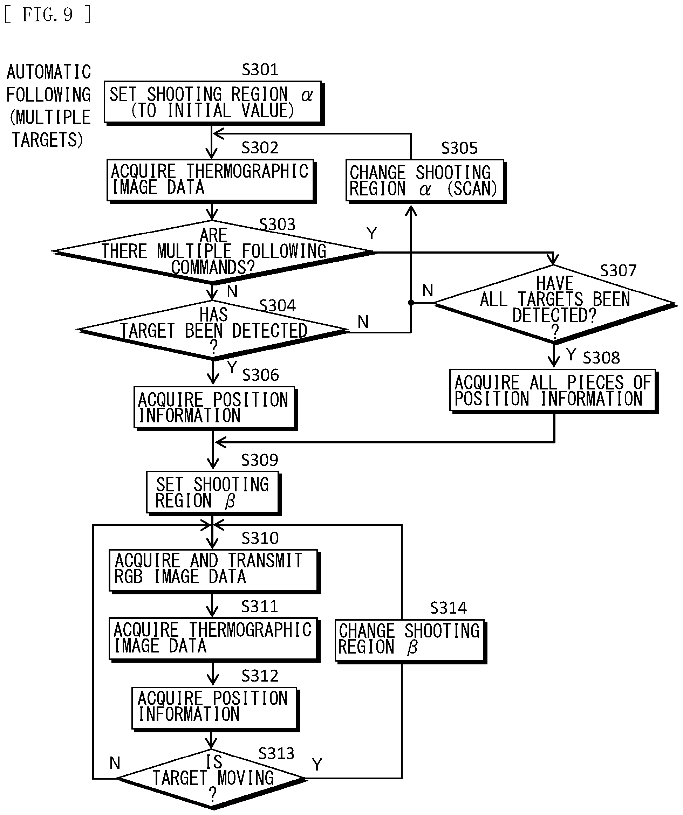

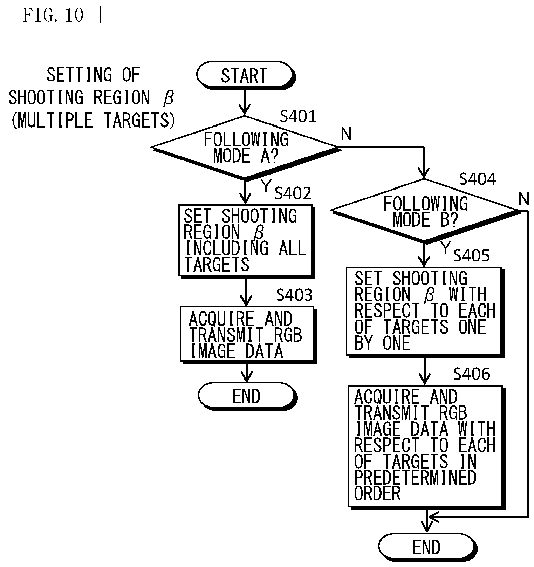

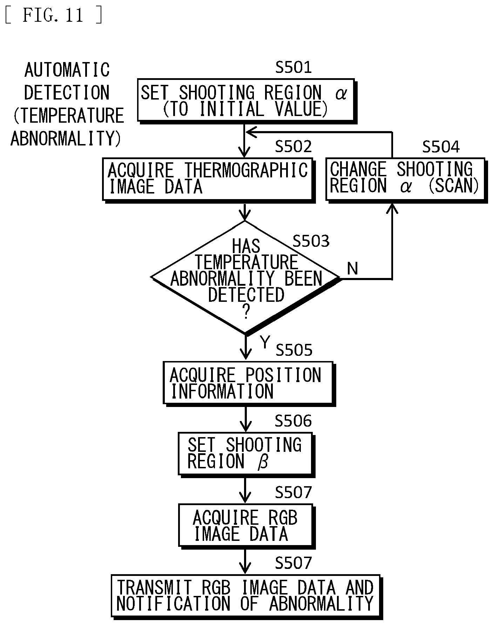

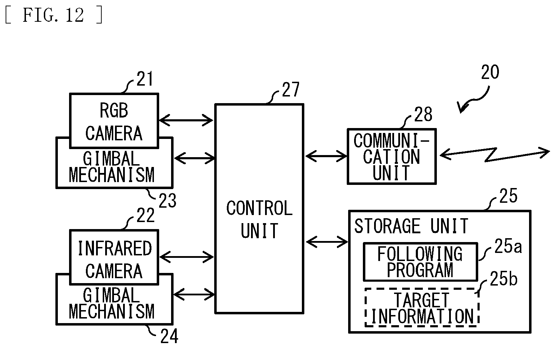

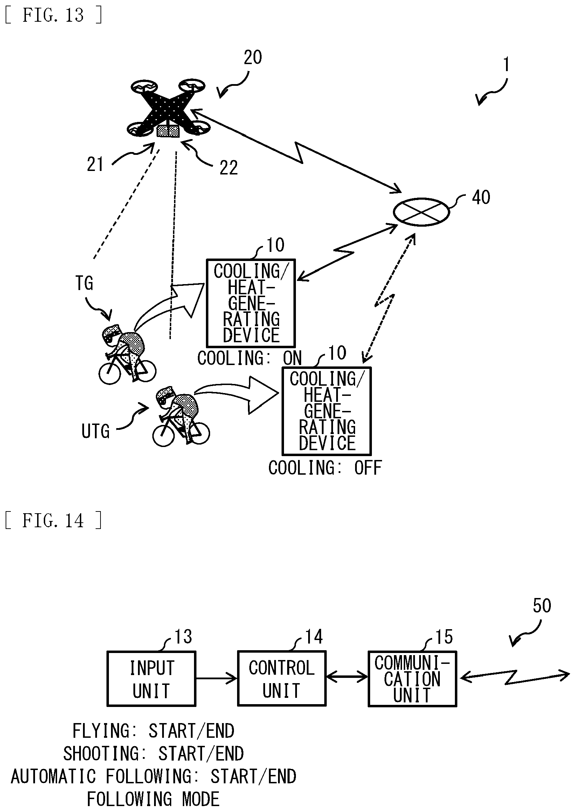

Modification Example A: An example of acquiring multiple targets in an imaging region (FIGs. 8 and 9)
Modification Example B: An example of acquiring multiple targets sequentially in the imaging region (FIG. 10)
Modification Example C: An example of detecting a temperature abnormality (FIG. 11)
Modification Example D: An example where a flying mechanism is eliminated (FIG. 12)
Modification Example E: An example where a host device is eliminated (FIG. 13)
Modification Example F: An example where a cooling unit is eliminated (FIG. 14)

### <1. Embodiment>

### [Configuration]

An information processing system 1 according to an embodiment of the present disclosure is described. FIG. 1 illustrates a schematic configuration example of the information processing system 1. The information processing system 1 includes, for example, two cooling/heat-generating devices 10, a tracking device 20, and a host device 30 as illustrated in FIG. 1.

The two cooling/heat-generating devices 10 are configured to be able to communicate with the tracking device 20 and the host device 30 through a network 40. The tracking device 20 is configured to be able to communicate with the two cooling/heat-generating devices 10 and the host device 30 through the network 40. The host device 30 is configured to be able to communicate with the two cooling/heat-generating devices 10 and the tracking device 20 through the network 40. The network 40 is, for example, a standards-compliant communication network such as a local area network (LAN). In the information processing system 1, the number of the cooling/heat-generating devices 10 is not limited to two, and may be one or three or more.

### (Cooling/Heat-generating Device 10)

The cooling/heat-generating device 10 is a device that includes, for example, a Peltier device and is able to change the direction of electric current, thereby performing either cooling or heat generation. When the cooling/heat-generating device 10 is provided on the surface of a human body, a thermographic image obtained through observation of the human body including the cooling/heat-generating device 10 with an infrared camera may include, for example, a characteristic temperature distribution CTD illustrated in FIG. 2. In the characteristic temperature distribution CTD, a spot provided with the cooling/heat-generating device 10 has a locally low or high temperature, and the ambient temperature of the cooling/heat-generating device 10 is comparable to the skin temperature of the human body. In the present embodiment, within a distribution of temperature comparable to the skin temperature of the human body, a temperature distribution in which a locally low or high temperature region exists shall be referred to as the characteristic temperature distribution CTD.

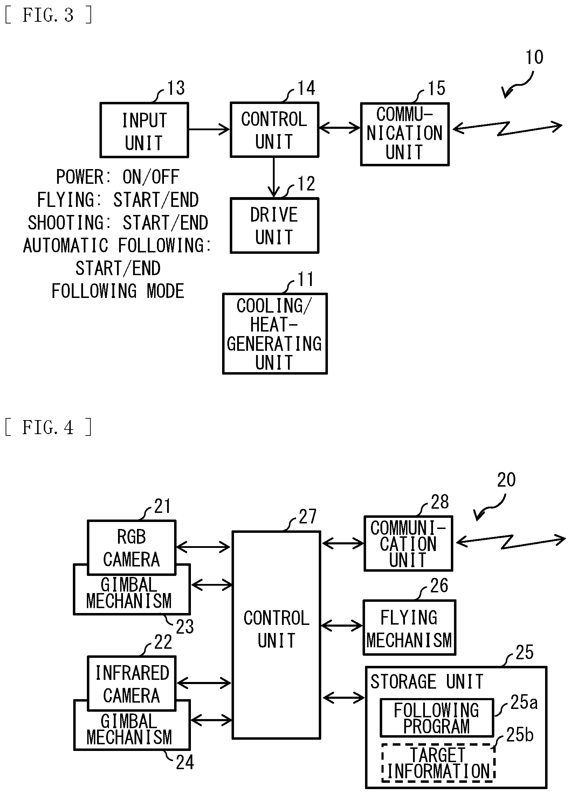

FIG. 3 illustrates a schematic configuration example of the cooling/heat-generating device 10. The cooling/heat-generating device 10 includes, for example, a cooling/heat-generating unit 11, a drive unit 12, an input unit 13, a control unit 14, and a communication unit 15 as illustrated in FIG. 3.

The cooling/heat-generating unit 11 is, for example, a Peltier device, and is put into a cooling state or a heat-generating state by a current supplied from the drive unit 12 flowing thereinto. The drive unit 12 includes a circuit that causes a predetermined current to flow into the cooling/heat-generating unit 11 in accordance with control by the control unit 14. The input unit 13 receives an input from a user and outputs a signal according to the received input to the control unit 14. The input unit 13 includes, for example, multiple buttons, and, by a user pressing the multiple buttons, receives from the user various commands such as the following ones:
Command 1: A command to turn on/off the cooling/heat-generating device 10;
Command 2: A command to start or end the flying of the tracking device 20;
Command 3: A command to start or end the shooting from the tracking device 20; and
Command 4: A command to start or end the automatic following with respect to a target TG in a shooting region β of the tracking device 20.

The target TG is a person provided with the cooling/heat-generating device 10 of which the cooling/heat-generating unit 11 is in a cooling state or a heat-generating state. It is to be noted that a person provided with the cooling/heat-generating device 10 in which no current flows into the cooling/heat-generating unit 11, i.e., of which the cooling/heat-generating unit 11 is in neither a cooling state nor a heat-generating state is a non-target UTG (i.e., is not the target TG).

The control unit 14 performs, for example, a process according to a user's command input through the input unit 13. When a command to turn on the cooling/heat-generating device 10 has been input to the input unit 13, electric power is supplied from a power source (for example, a battery) in the cooling/heat-generating device 10 to the drive unit 12, the control unit 14, and the communication unit 15, and the drive unit 12, the control unit 14, and the communication unit 15 are started. When a command to turn off the cooling/heat-generating device 10 has been input to the input unit 13, the power supply from the power source (for example, the battery) in the cooling/heat-generating device 10 to the drive unit 12, the control unit 14, and the communication unit 15 is stopped, and the drive unit 12, the control unit 14, and the communication unit 15 stop operating.

When a command to start the flying of the tracking device 20 has been input to the input unit 13, the control unit 14 transmits a command to start the flying to the tracking device 20 through the communication unit 15 and the network 40. When a command to end the flying of the tracking device 20 has been input to the input unit 13, the control unit 14 transmits a command to end the flying to the tracking device 20 through the communication unit 15 and the network 40. When a command to start the shooting from the tracking device 20 has been input to the input unit 13, the control unit 14 transmits a command to start the shooting to the tracking device 20 through the communication unit 15 and the network 40. When a command to end the shooting from the tracking device 20 has been input to the input unit 13, the control unit 14 transmits a command to end the shooting to the tracking device 20 through the communication unit 15 and the network 40.

When a command to start the automatic following with respect to the target TG in the shooting region β of the tracking device 20 has been input to the input unit 13, the control unit 14 transmits a command to start the automatic following to the tracking device 20 through the communication unit 15 and the network 40. In the following, causing the shooting region β of the tracking device 20 to automatically follow the target TG is referred to as the "automatic following". When a command to end the automatic following has been input to the input unit 13, the control unit 14 transmits a command to end the automatic following to the tracking device 20 through the communication unit 15 and the network 40. When a command to change a following mode has been input to the input unit 13, the control unit 14 transmits a command to change the following mode to the tracking device 20 through the communication unit 15 and the network 40.

The communication unit 15 is an interface that communicates with the tracking device 20 and the host device 30 through the network 40.

### (Tracking Device 20)

FIG. 4 illustrates a schematic configuration example of the tracking device 20. The tracking device 20 includes, for example, two cameras (an RGB camera 21 and an infrared camera 22), two gimbal mechanisms 23 and 24, a storage unit 25, a flying mechanism 26, a control unit 27, and a communication unit 28 as illustrated in FIG. 4.

The RGB camera 21 is a device that detects light of a visible wavelength range that enters from the outside, thereby generating visible image data (red, green, blue (RGB) image data), and includes, for example, a charge-coupled devices (CCD) image sensor or a complementary metal-oxide semiconductor (CMOS) image sensor that has sensitivity to light of the visible wavelength range. The RGB camera 21 generates RGB image data at a predetermined frame rate, thereby outputting visible moving image data (RGB moving image data). For example, in accordance with control from the control unit 27, the RGB camera 21 starts or ends the shooting or makes an adjustment of the angle of view. The area of a shooting region β of the RGB camera 21 is changed by the adjustment of the angle of view.

The infrared camera 22 is a device that detects light of an infrared wavelength range that enters from the outside, thereby generating thermographic image data, and includes, for example, a CCD image sensor or a CMOS image sensor that has sensitivity to light of the infrared wavelength range. The infrared camera 22 generates thermographic image data at a predetermined frame rate, thereby outputting thermographic moving image data. For example, in accordance with control from the control unit 27, the infrared camera 22 starts or ends the shooting or makes an adjustment of the angle of view. The area of a shooting region α of the infrared camera 22 is changed by the adjustment of the angle of view.

The gimbal mechanism 23 includes one or more gimbals. The gimbal mechanism 23 includes, for example, a gimbal that rotates the RGB camera 21 in a horizontal direction and a gimbal that rotates the RGB camera 21 in a vertical direction. For example, in accordance with control by the control unit 27, the gimbal mechanism 23 rotates these two gimbals, thereby making it possible to move the shooting region β of the RGB camera 21 in at least one of the horizontal direction or the vertical direction.

The gimbal mechanism 24 includes one or more gimbals. The gimbal mechanism 24 includes, for example, a gimbal that rotates the infrared camera 22 in the horizontal direction and a gimbal that rotates the infrared camera 22 in the vertical direction. For example, in accordance with control by the control unit 27, the gimbal mechanism 23 rotates these two gimbals, thereby making it possible to move the shooting region α of the infrared camera 22 in at least one of the horizontal direction or the vertical direction.

The storage unit 25 includes, for example, a read-only memory (ROM) that stores therein various programs to be executed by the control unit 27 and a random access memory (RAM) that stores therein various parameters, a result of an operation or a sensor value, etc. For example, a following program 25a has been stored in the storage unit 25. The following program 25a includes a series of procedures for controlling the automatic following with respect to the target TG in the shooting region β of the RGB camera 21.

For example, information obtained by the control unit 27 executing the following program 25a (for example, target information 25b) is stored in the storage unit 25. The target information 25b is information regarding a position corresponding to a characteristic temperature distribution CTD included in thermographic image data, specifically, position information of the target TG in a coordinate system of the RGB camera 21.

The flying mechanism 26 includes an unmanned aerial vehicle. The flying mechanism 26 includes, for example, multiple sets of motors and propellers and a drive unit that drives each motor. In the flying mechanism 26, for example, one propeller is provided for each motor, and, in accordance with control by the control unit 27, the motor is driven, thereby the propeller rotates. Lift force generated by the rotation of the propellers makes it possible for the tracking device 20 to float from the ground or land on the ground. Furthermore, by changing the ratio of the rotation frequency of each propeller, it becomes possible to cause the tracking device 20 in a state of floating from the ground to move through a space in the horizontal direction or the vertical direction or rotate in a horizontal plane. Therefore, in accordance with control by the control unit 27, the flying mechanism 26 is able to move the shooting region α of the infrared camera 22 or the shooting region β of the RGB camera 21 in at least one of the horizontal direction or the vertical direction or rotate it rotate in the horizontal plane.

The control unit 27 controls the two cameras (the RGB camera 21 and the infrared camera 22), the two gimbal mechanisms 23 and 24, the storage unit 25, the flying mechanism 26, and the communication unit 28. For example, loading the following program 25a causes the control unit 27 to control the automatic following with respect to the target TG in the shooting region β of the RGB camera 21. The control unit 27 performs, for example, a process according to a command input from each cooling/heat-generating device 10 or the host device 30.

For example, when having received a command to start the flying from each cooling/heat-generating device 10 or the host device 30, the control unit 27 outputs, to the flying mechanism 26, for example, a command to cause the tracking device 20 to take off and float to a predetermined height from the ground. For example, when having received a command to end the flying from each cooling/heat-generating device 10 or the host device 30, the control unit 27 outputs, to the flying mechanism 26, for example, a command to get the tracking device 20 back to the point of departure. For example, when having received a command to start the shooting from each cooling/heat-generating device 10 or the host device 30, the control unit 27 outputs, to the RGB camera 21, for example, a command to start the shooting. For example, when having received a command to end the shooting from each cooling/heat-generating device 10 or the host device 30, the control unit 27 outputs, to the RGB camera 21, for example, a command to end the shooting.

For example, when having received a command to start the automatic following from each cooling/heat-generating device 10 or the host device 30, the control unit 27 outputs a series of commands for the automatic following to the two cameras (the RGB camera 21 and the infrared camera 22), the two gimbal mechanisms 23 and 24, and the flying mechanism 26. For example, when having received a command to end the automatic following from each cooling/heat-generating device 10 or the host device 30, the control unit 27 stops the output of the commands for the automatic following. For example, when the control unit 27 has received a command to change the following mode from each cooling/heat-generating device 10 or the host device 30, the control unit 27 changes the following mode.

The communication unit 28 is an interface that communicates with each cooling/heat-generating device 10 and the host device 30 through the network 40.

It is to be noted that in a case where commands from each cooling/heat-generating device 10 and the host device 30 conflict, the control unit 27 may prioritize the command from the cooling/heat-generating device 10.

### (Host Device 30)

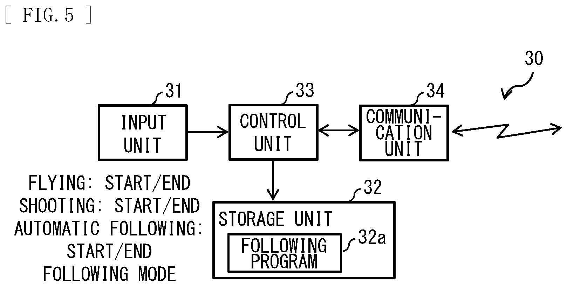

FIG. 5 illustrates a schematic configuration example of the host device 30. The host device 30 includes, for example, an input unit 31, a storage unit 32, a control unit 33, and a communication unit 34 as illustrated in FIG. 5.

The input unit 31 receives an input from a user and outputs a signal according to the received input to the control unit 33. The input unit 13 includes, for example, an input interface such as a keyboard and mouse or a touch panel. The storage unit 32 includes, for example, a ROM that stores therein various programs to be executed by the control unit 33 and a RAM that stores therein various parameters, a result of an operation or a sensor value, etc. For example, a following program 32a has been stored in the storage unit 32. The following program 32a includes a series of procedures for controlling the automatic following with respect to the target TG in the shooting region β of the RGB camera 21.

The control unit 33 controls the input unit 31, the storage unit 32, and the communication unit 34. For example, loading the following program 32a causes the control unit 33 to control the automatic following with respect to the target TG in the shooting region β of the RGB camera 21. The control unit 33 performs, for example, a process according to a command input from the input unit 31.

For example, the control unit 33 performs a process according to a user's command input through the input unit 31. When a command to start the flying of the tracking device 20 has been input to the input unit 31, the control unit 33 transmits a command to start the flying to the tracking device 20 through the communication unit 34 and the network 40. When a command to end the flying of the tracking device 20 has been input to the input unit 31, the control unit 33 transmits a command to end the flying to the tracking device 20 through the communication unit 34 and the network 40. When a command to start the shooting from the tracking device 20 has been input to the input unit 31, the control unit 33 transmits a command to start the shooting to the tracking device 20 through the communication unit 34 and the network 40. When a command to end the shooting from the tracking device 20 has been input to the input unit 31, the control unit 33 transmits a command to end the shooting to the tracking device 20 through the communication unit 34 and the network 40.

When a command to start the automatic following has been input to the input unit 31, the control unit 33 transmits a command to start the automatic following to the tracking device 20 through the communication unit 34 and the network 40. When a command to end the automatic following has been input to the input unit 31, the control unit 33 transmits a command to end the automatic following to the tracking device 20 through the communication unit 34 and the network 40. When a command to change the following mode has been input to the input unit 31, the control unit 33 transmits a command to change the following mode to the tracking device 20 through the communication unit 34 and the network 40. The communication unit 34 is an interface that communicates with each cooling/heat-generating device 10 and the host device 30 through the network 40.

### [Operation]

Subsequently, processing procedures in the information processing system 1 are described.

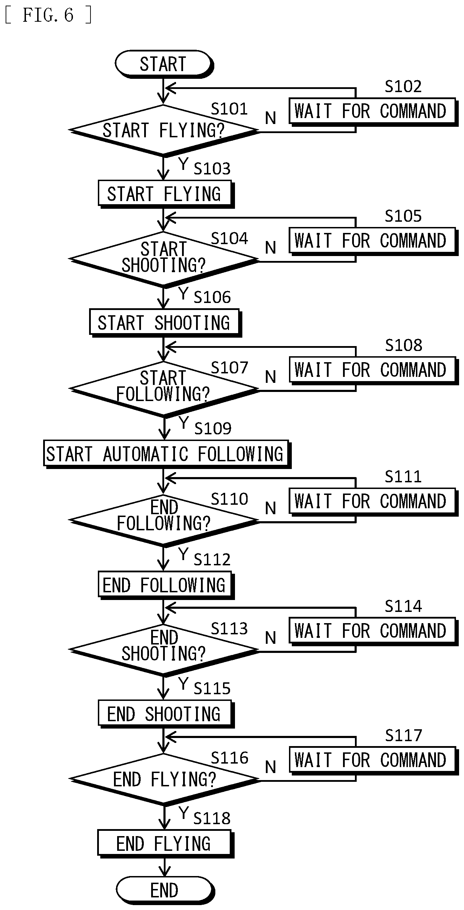

FIG. 6 illustrates an example of the processing procedures in the information processing system 1. The tracking device 20 (the control unit 27) determines whether or not a command to start the flying has been input to the tracking device 20 from each cooling/heat-generating device 10 or the host device 30 (step S101). As a result, in a case where a command to start the flying has not been input, the tracking device 20 (the control unit 27) waits for an input of a command to start the flying (step S102). In a case where a command to start the flying has been input, the tracking device 20 (the control unit 27) outputs, to the flying mechanism 26, for example, a command to cause the tracking device 20 to take off and float to a predetermined height from the ground. For example, on the basis of the command, the flying mechanism 26 drives the drive unit to rotate the propellers, thereby causing the tracking device 20 to take off and float to the predetermined height from the ground (step S103).

Next, the tracking device 20 (the control unit 27) determines whether or not a command to start the shooting has been input to the tracking device 20 from each cooling/heat-generating device 10 or the host device 30 (step S104). As a result, in a case where a command to start the shooting has not been input, the tracking device 20 (the control unit 27) waits for an input of a command to start the shooting (step S105). In a case where a command to start the shooting has been input, the tracking device 20 (the control unit 27) outputs, to the RGB camera 21, a command to start the shooting. The RGB camera 21 starts the shooting on the basis of the command, and acquires RGB image data (RGB moving image data) at the predetermined frame rate (step S106).

Next, the tracking device 20 (the control unit 27) determines whether or not a command to start the automatic following has been input to the tracking device 20 from each cooling/heat-generating device 10 or the host device 30 (step S107). As a result, in a case where a command to start the automatic following has not been input, the tracking device 20 (the control unit 27) waits for an input of a command to start the automatic following (step S108). In a case where a command to start the automatic following has been input, the tracking device 20 (the control unit 27) outputs a series of commands for executing the automatic following to the two cameras (the RGB camera 21 and the infrared camera 22), the two gimbal mechanisms 23 and 24, and the flying mechanism 26. The two cameras (the RGB camera 21 and the infrared camera 22), the two gimbal mechanisms 23 and 24, and the flying mechanism 26 start the automatic following on the basis of the commands (step S109).

Next, the tracking device 20 (the control unit 27) determines whether or not a command to end the automatic following has been input to the tracking device 20 from each cooling/heat-generating device 10 or the host device 30 (step S110). As a result, in a case where a command to end the automatic following has not been input, the tracking device 20 (the control unit 27) waits for an input of a command to end the automatic following (step S111). In a case where a command to end the automatic following has been input, the tracking device 20 (the control unit 27) outputs various commands for stopping the automatic following to the two cameras (the RGB camera 21 and the infrared camera 22), the two gimbal mechanisms 23 and 24, and the flying mechanism 26. The two cameras (the RGB camera 21 and the infrared camera 22), the two gimbal mechanisms 23 and 24, and the flying mechanism 26 end the automatic following on the basis of the commands (step S112).

Next, the tracking device 20 (the control unit 27) determines whether or not a command to end the shooting has been input to the tracking device 20 from each cooling/heat-generating device 10 or the host device 30 (step S113). As a result, in a case where a command to end the shooting has not been input, the tracking device 20 (the control unit 27) waits for an input of a command to end the shooting (step S114). In a case where a command to end the shooting has been input, the tracking device 20 (the control unit 27) outputs, to the RGB camera 21, a command to end the shooting. The RGB camera 21 ends the shooting on the basis of the command (step S115).

The tracking device 20 (the control unit 27) determines whether or not a command to end the flying has been input to the tracking device 20 from each cooling/heat-generating device 10 or the host device 30 (step S116). As a result, in a case where a command to end the flying has not been input, the tracking device 20 (the control unit 27) waits for an input of a command to end the flying (step S117). In a case where a command to end the flying has been input, the tracking device 20 (the control unit 27) outputs, to the flying mechanism 26, for example, a command to get the tracking device 20 back to the point of departure. For example, on the basis of the command, the flying mechanism 26 drives the drive unit to rotate the propellers, thereby getting the tracking device 20 back to the point of departure (step S118).

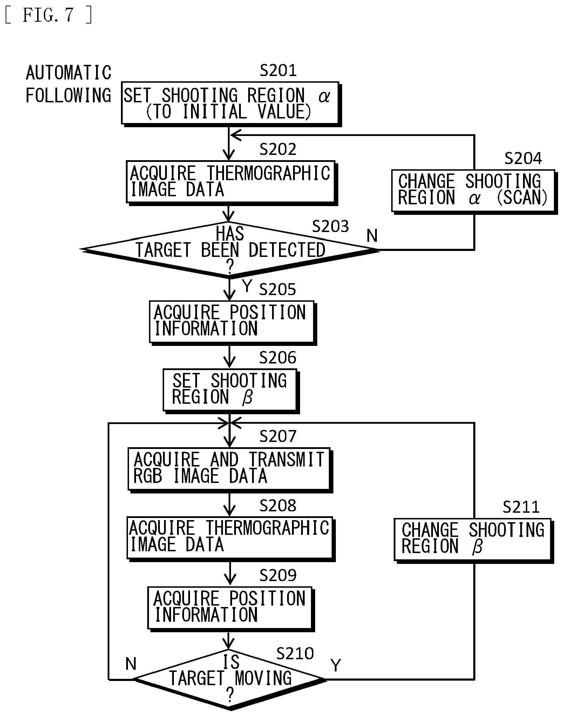

Subsequently, procedures of the automatic following at step S109 described above are described. FIG. 7 illustrates an example of the processing procedures of the automatic following.

First, the tracking device 20 (the control unit 27) sets the shooting region α of the infrared camera 22 to an initial value (step S201). Next, the tracking device 20 (the control unit 27) transmits a command to start the shooting to the infrared camera 22. The infrared camera 22 starts the shooting on the basis of the command, and generates thermographic image data (thermographic moving image data) at the predetermined frame rate. The tracking device 20 (the control unit 27) acquires the thermographic image data (the thermographic moving image data) from the infrared camera 22 (step S202).

Next, the tracking device 20 (the control unit 27) determines whether or not a characteristic temperature distribution CTD (a target TG) is included in the acquired thermographic image data (the thermographic moving image data) (step S203). As a result, in a case where a characteristic temperature distribution CTD (a target TG) is not included in the thermographic image data (the thermographic moving image data), the tracking device 20 (the control unit 27) changes the shooting region α of the infrared camera 22 (step S204). In a case where a characteristic temperature distribution CTD (a target TG) is included in the thermographic image data (the thermographic moving image data), information regarding a position corresponding to the characteristic temperature distribution CTD (the target TG) included in the thermographic image data (the thermographic moving image data) is derived (step S205). Specifically, the tracking device 20 (the control unit 27) derives position information of the target TG in the coordinate system of the RGB camera 21.

Next, the tracking device 20 (the control unit 27) controls the automatic following with respect to the target in the shooting region β to cause the target TG to be included in the shooting region β of the RGB camera 21. Specifically, the tracking device 20 (the control unit 27) sets the shooting region β to cause the target TG to be included in the shooting region β (for example, in a middle region of the shooting region β) of the RGB camera 21 (step S206). Next, the tracking device 20 (the control unit 27) acquires RGB image data (RGB moving image data) obtained through the shooting of the newly-set shooting region β from the RGB camera 21 (step S207). The tracking device 20 (the control unit 27) transmits the acquired RGB image data (the RGB moving image data) to the host device 30 through the communication unit 28 and the network 40.

Next, the tracking device 20 (the control unit 27) acquires thermographic image data (thermographic moving image data) from the infrared camera 22 (step S208). Next, the tracking device 20 (the control unit 27) derives information regarding a position corresponding to the characteristic temperature distribution CTD (the target TG) included in the acquired thermographic image data (the thermographic moving image data) (step S209). At this time, the tracking device 20 (the control unit 27) determines whether or not the target TG is moving (step S210). Specifically, the tracking device 20 (the control unit 27) compares the position information acquired at step S205 and the position information acquired at step S209, and, in a case where a difference is substantially negligible (for example, in a case where the target TG is acquired in the middle region of the shooting region β), moves on to step S207 without resetting the shooting region β (i.e., with the shooting region β kept unchanged). In a case where a difference is substantially non-negligible (for example, in a case where the target TG deviates from the middle region of the shooting region β), it changes the shooting region β to cause the target TG to be acquired in the middle of the shooting region β (step S211), and moves on to step S207.

### [Effects]

Subsequently, effects of the information processing system 1 are described.

In the present embodiment, the automatic following with respect to a target TG in the shooting region β is controlled to cause the target TG located in a position corresponding to a characteristic temperature distribution CTD included in thermographic image data to be included in the shooting region β for RGB image data. Thus, even in a case where the target TG has a similar feature in both the RGB image data and the thermographic image data, it is possible to eliminate the possibility of falsely recognizing something resembling the target TG as the target TG.

In the present embodiment, the automatic following is controlled by changing at least one of the direction, the angle of view, or the position of the RGB camera 21 that shoots an image and acquires visible image data. The direction of the RGB camera 21 may be adjusted, for example, by the gimbal mechanism 23. The angle of view of the RGB camera 21 may be adjusted, for example, by changing the focal length of the RGB camera 21. The position of the RGB camera 21 may be adjusted, for example, by the flying mechanism 26. Thus, it is possible to perform the automatic following smoothly.

In the present embodiment, the gimbal mechanism 23 that adjusts the direction of the RGB camera 21 is provided. Thus, it is possible to perform the automatic following smoothly. Furthermore, in the present embodiment, the flying mechanism 26 that adjusts the position of the RGB camera 21 is provided. Thus, it is possible to perform the automatic following smoothly.

### <2. Modification Examples>

Subsequently, modification examples of the information processing system 1 are described.

### [Modification Example A]

In the above-described embodiment, one target TG is an object of the automatic following; however, for example, as illustrated in FIG. 8, multiple targets TG may be objects of the automatic following. FIG. 8 illustrates, as an example, a case where four targets TG1, TG2, TG3, and TG4 are objects of the automatic following.

Subsequently, procedures of the automatic following in the present modification example are described. FIG. 9 illustrates an example of the processing procedures of the automatic following in the present modification example.

First, the tracking device 20 (the control unit 27) sets the shooting region α of the infrared camera 22 to the initial value (step S301). Next, the tracking device 20 (the control unit 27) transmits a command to start the shooting to the infrared camera 22. The infrared camera 22 starts the shooting on the basis of the command, and generates thermographic image data (thermographic moving image data) at the predetermined frame rate. The tracking device 20 (the control unit 27) acquires the thermographic image data (the thermographic moving image data) from the infrared camera 22 (step S302).

Next, the tracking device 20 (the control unit 27) determines whether or not multiple commands to start the automatic following have been received (step S303). As a result, in a case where only one command to start the automatic following has been received, the tracking device 20 (the control unit 27) determines whether or not one characteristic temperature distribution CTD (one target TG) is included in the acquired thermographic image data (the thermographic moving image data) (step S304).

As a result, in a case where no characteristic temperature distribution CTD (no target TG) is included in the thermographic image data (the thermographic moving image data), the tracking device 20 (the control unit 27) changes the shooting region α of the infrared camera 22 (step S305). In a case where one characteristic temperature distribution CTD (one target TG) is included in the thermographic image data (the thermographic moving image data), information regarding a position corresponding to the characteristic temperature distribution CTD (the target TG) included in the thermographic image data (the thermographic moving image data) is derived (step S306). Specifically, the tracking device 20 (the control unit 27) derives position information of the target TG in the coordinate system of the RGB camera 21.

At step S303, in a case where multiple commands to start the automatic following have been received, the tracking device 20 (the control unit 27) determines whether or not as many characteristic temperature distributions CTD (targets TG) as the number of objects of the automatic following (the number of the received commands to start the automatic following) are included in the acquired thermographic image data (thermographic moving image data) (step S307). As a result, in a case where as many characteristic temperature distributions CTD (targets TG) as the number of objects of the automatic following are not included in the thermographic image data (the thermographic moving image data), the tracking device 20 (the control unit 27) changes the shooting region α of the infrared camera 22 (step S307). In a case where as many characteristic temperature distributions CTD (targets TG) as the number of objects of the automatic following are included in the thermographic image data (the thermographic moving image data), pieces of information regarding respective positions corresponding to the characteristic temperature distributions CTD (the targets TG) included in the thermographic image data (the thermographic moving image data) are derived (step S308). Specifically, the tracking device 20 (the control unit 27) derives respective pieces of position information of the targets TG in the coordinate system of the RGB camera 21.

Next, the tracking device 20 (the control unit 27) controls the automatic following with respect to the targets in the shooting region β to cause all the targets TG to be included in the shooting region β of the RGB camera 21. Specifically, the tracking device 20 (the control unit 27) sets the shooting region β to cause all the targets TG to be included in the shooting region β of the RGB camera 21 (step S309). Next, the tracking device 20 (the control unit 27) acquires RGB image data (RGB moving image data) obtained through the shooting of the newly-set shooting region β from the RGB camera 21 (step S310). The tracking device 20 (the control unit 27) transmits the acquired RGB image data (the RGB moving image data) to the host device 30 through the communication unit 28 and the network 40.

Next, the tracking device 20 (the control unit 27) acquires thermographic image data (thermographic moving image data) from the infrared camera 22 (step S311). Next, the tracking device 20 (the control unit 27) derives information regarding a position corresponding to each characteristic temperature distribution CTD (each target TG) included in the acquired thermographic image data (the thermographic moving image data) (step S312). At this time, the tracking device 20 (the control unit 27) determines whether or not each target TG is moving (step S313). Specifically, the tracking device 20 (the control unit 27) compares the position information acquired at step S306 and the position information acquired at step S312, and, in a case where a difference is substantially negligible (for example, in a case where all the targets TG are acquired in the middle region of the shooting region β), moves on to step S310 without resetting the shooting region β (i.e., with the shooting region β kept unchanged). In a case where a difference is substantially non-negligible (for example, in a case where at least one target TG deviates from the middle region of the shooting region β), it changes the shooting region β to cause all the targets TG to be acquired in the middle of the shooting region β (step S314), and moves on to step S310.

Subsequently, effects of the information processing system 1 according to the present modification example are described.

In the present modification example, the automatic following with respect to each target TG in the shooting region β is controlled to cause multiple targets TG located in respective positions corresponding to multiple characteristic temperature distributions CTD included in thermographic image data to be included in the shooting region β for RGB image data. Thus, even in a case where the target TG has a similar feature in both the RGB image data and the thermographic image data, it is possible to eliminate the possibility of falsely recognizing something resembling the target TG as the target TG.

### [Modification Example B]

In Modification Example A described above, the automatic following is performed to cause multiple targets TG that are objects of the automatic following to be all acquired in the shooting region β. However, in Modification Example A described above, the automatic following may be performed to cause multiple targets TG that are objects of the automatic following to be sequentially acquired one by one in the shooting region β.

Here, the automatic following where multiple targets TG that are objects of the automatic following are all acquired in the shooting region β is referred to as following mode A. Furthermore, the automatic following where multiple targets TG that are objects of the automatic following are sequentially acquired one by one in the shooting region β is referred to as following mode B. At this time, for example, when having received a command to change the following mode (a signal adapted to switch the method for the automatic following) from the cooling/heat-generating device 10 or the host device 30, the tracking device 20 (the control unit 27) controls the automatic following to cause the method for the automatic following to be switched in response to the input of the command to change the following mode.

FIG. 10 illustrates an example of a series of processing procedures regarding how to change the following mode.

When having received a command to change the following mode, the tracking device 20 (the control unit 27) determines whether or not the following mode included in the command to change the following mode is following mode A (step S401). As a result, in a case where the following mode included in the command to change the following mode is following mode A, the tracking device 20 (the control unit 27) sets the shooting region β to cause all targets TG are acquired in the shooting region β (or the middle of the shooting region β) (step S402). The tracking device 20 (the control unit 27) acquires RGB image data (RGB moving image data) obtained through the shooting of the set shooting region β from the RGB camera 21, and transmits it to the host device 30 through the communication unit 28 and the network 40 (step S403).

In a case where the following mode included in the command to change the following mode is not following mode A, the tracking device 20 (the control unit 27) determines whether or not the following mode included in the command to change the following mode is following mode B (step S404). As a result, in a case where the following mode included in the command to change the following mode is following mode B, the tracking device 20 (the control unit 27) sets a shooting region β with respect to each of the targets TG that are objects of the automatic following one by one (step S405). The tracking device 20 (the control unit 27) selects the set multiple shooting regions β sequentially in a predetermined order, and acquires RGB image data (RGB moving image data) obtained through the shooting of the selected shooting region β from the RGB camera 21, and transmits it to the host device 30 through the communication unit 28 and the network 40 (step S406).

In a case where multiple characteristic temperature distributions CTD have been detected, the tracking device 20 (the control unit 27) may control the automatic following to cause images of multiple targets TG to be shot in the order according to a positional relationship between the targets TG. Furthermore, in a case where there is a difference in temperature among the acquired multiple characteristic temperature distributions CTD, for example, the tracking device 20 (the control unit 27) may control the automatic following to cause images of multiple targets TG to be shot in the order according to a magnitude relationship between respective temperatures of the characteristic temperature distributions CTD. In this way, by controlling the automatic following on the basis of some kind of relationship between the multiple characteristic temperature distributions CTD, it becomes possible to reduce the trouble as compared with manual following.

### [Modification Example C]

In the above-described embodiment and its modification examples, in a case where an abnormal temperature distribution different from the characteristic temperature distribution CTD (hereinafter, referred to as an "abnormal temperature distribution") has been detected in the acquired thermographic image data (the thermographic moving image data), the tracking device 20 (the control unit 27) may perform the following process.

FIG. 11 illustrates an example of a series of processing procedures when an abnormal temperature distribution has been detected.

First, the tracking device 20 (the control unit 27) sets the shooting region α of the infrared camera 22 to the initial value (step S501). Next, the tracking device 20 (the control unit 27) transmits a command to start the shooting to the infrared camera 22. The infrared camera 22 starts the shooting on the basis of the command, and generates thermographic image data (thermographic moving image data) at the predetermined frame rate. The tracking device 20 (the control unit 27) acquires the thermographic image data (the thermographic moving image data) from the infrared camera 22 (step S502).

Next, the tracking device 20 (the control unit 27) determines whether or not an abnormal temperature distribution is included in the acquired thermographic image data (the thermographic moving image data) (step S503). As a result, in a case where an abnormal temperature distribution is not included in the thermographic image data (the thermographic moving image data), the tracking device 20 (the control unit 27) changes the shooting region α of the infrared camera 22 (step S504). In a case where an abnormal temperature distribution is included in the thermographic image data (the thermographic moving image data), information regarding a position corresponding to the abnormal temperature distribution included in the thermographic image data (the thermographic moving image data) is derived (step S505). Specifically, the tracking device 20 (the control unit 27) derives position information of the abnormal temperature distribution in the coordinate system of the RGB camera 21.

Next, the tracking device 20 (the control unit 27) controls the automatic following with respect to a source of the abnormal temperature distribution in the shooting region β to cause the source of the abnormal temperature distribution to be included in the shooting region β of the RGB camera 21. Specifically, the tracking device 20 (the control unit 27) sets the shooting region β to cause the source of the abnormal temperature distribution to be included in the shooting region β (for example, in the middle region of the shooting region β) of the RGB camera 21 (step S506). Next, the tracking device 20 (the control unit 27) acquires RGB image data (RGB moving image data) obtained through the shooting of the newly-set shooting region β from the RGB camera 21 (step S507). The tracking device 20 (the control unit 27) transmits the acquired RGB image data (the RGB moving image data) to the host device 30 through the communication unit 28 and the network 40.

In this way, by locating the position of the source of the abnormal temperature distribution, it becomes possible for the user of the information processing system 1 to identify the source of the abnormal temperature distribution. For example, in a case where the source of the abnormal temperature distribution is the cooling/heat-generating device 10, the user determines that an abnormality has occurred in the cooling/heat-generating devices 10 that is abnormal in temperature, and is able to collect the cooling/heat-generating devices 10. Thus, it is possible to prevent failures and accidents, such as thermal runaway of a robot (an electronic apparatus). For example, in a case where the source of the abnormal temperature distribution is a heatstroke patient, the user is able to treat the heatstroke patient at an early stage.

### [Modification Example D]

In the above-described embodiment and its modification examples, for example, the flying mechanism 26 may be eliminated as illustrated in FIG. 12. At this time, the tracking device 20 may be fixed, for example, in a place where a target TG is. Even in such a case, it is possible to obtain similar effects to those in the above-described embodiment and its modification examples, except that the positions of the RGB camera 21 and the infrared camera 22 are unable to be changed significantly.

### [Modification Example E]

In the above-described embodiment and its modification examples, for example, the host device 30 may be eliminated as illustrated in FIG. 13. Even in such a case, it is possible to send out the above-described various commands from the cooling/heat-generating devices 10; therefore, it is possible to obtain similar effects to those in the above-described embodiment and its modification examples.

### [Modification Example F]

In the above-described embodiment and its modification examples, the cooling/heat-generating device 10 may be eliminated as illustrated in FIG. 14, for example. In this case, by using cooling material and heat-generating material that make it possible to generate a characteristic temperature distribution CTD, it becomes possible to obtain similar effects to those in the above-described embodiment and its modification examples.

As above, the present disclosure has been described with the embodiment and its modification examples; however, the present disclosure is not limited to the above-described embodiment, etc., and it is possible to make various modifications. It is to be noted that the effects described in the present specification are merely an example. The effects of the present disclosure are not limited to those described in the present specification. The present disclosure may have effects other than those described in the present specification.

Furthermore, for example, the present disclosure may have the following configurations.
(1) An information processing apparatus including
   a control unit that controls automatic following with respect to a target in a shooting region for a visible image to cause the target located in a position corresponding to a characteristic temperature distribution included in thermographic image data to be included in the shooting region,
   the thermographic image data being data obtained by shooting an image in response to a command to start the automatic following.
(2) The information processing apparatus according to (1), in which
   the control unit controls the automatic following by changing at least one of a direction, an angle of view, or a position of a shooting unit that shoots an image and acquires visible image data.
(3) The information processing apparatus according to (1) or (2), in which
   when a plurality of the characteristic temperature distributions is included in the thermographic image data, the control unit controls the automatic following to cause a plurality of the targets located in respective positions corresponding to the plurality of the characteristic temperature distributions to be all included in the shooting region.
(4) The information processing apparatus according to (1) or (2), in which
   when the plurality of the characteristic temperature distributions is included in the thermographic image data, the control unit controls the automatic following to cause images of the plurality of the targets to be shot in an order according to a magnitude relationship between respective temperatures of the plurality of the characteristic temperature distributions.
(5) The information processing apparatus according to any one of (1) to (4), in which
   the control unit controls the automatic following to cause a method for the automatic following to be switched in response to an input of a signal adapted to switch the method for the automatic following.
(6) A mobile body including
   a control unit that controls automatic following with respect to a target in a shooting region for a visible image to cause the target located in a position corresponding to a characteristic temperature distribution included in thermographic image data to be included in the shooting region,
   the thermographic image data being data obtained by shooting an image in response to a command to start the automatic following.
(7) The mobile body according to (6), in which
   the control unit controls the automatic following by changing at least one of a direction, an angle of view, or a position of a shooting unit that shoots an image and acquires visible image data.
(8) The mobile body according to (7), including:
   the shooting unit; and
   an adjustment unit that adjusts at least one of the direction, the angle of view, or the position of the shooting unit, in which
   the control unit controls the automatic following by controlling the adjustment unit to change at least one of the direction, the angle of view, or the position of the shooting unit.
(9) The mobile body according to (8), in which
   the adjustment unit includes one or more gimbal mechanisms.
(10) The mobile body according to (9), in which
   the adjustment unit includes a flying mechanism that changes a spatial position of the mobile body.
(11) The mobile body according to any one of (6) to (10), in which
   when a plurality of the characteristic temperature distributions is included in the thermographic image data, the control unit controls the automatic following to cause a plurality of the targets located in respective positions corresponding to the plurality of the characteristic temperature distributions to be all included in the shooting region.
(12) The mobile body according to any one of (6) to (10), in which
   when the plurality of the characteristic temperature distributions is included in the thermographic image data, the control unit controls the automatic following to cause images of the plurality of the targets to be shot in an order according to a magnitude relationship between respective temperatures of the plurality of the characteristic temperature distributions.
(13) The mobile body according to any one of (6) to (12), in which
   the control unit controls the automatic following to cause a method for the automatic following to be switched in response to an input of a signal adapted to switch the method for the automatic following.
(14) An information processing method including
   controlling automatic following with respect to a target in a shooting region for a visible image to cause the target located in a position corresponding to a characteristic temperature distribution included in thermographic image data to be included in the shooting region,
   the thermographic image data being data obtained by shooting an image in response to a command to start the automatic following.

In the information processing apparatus, the mobile body, and the information processing method according to the embodiment of the present disclosure, automatic following with respect to a target in a shooting region for a visible image is controlled to cause the target located in a position corresponding to a characteristic temperature distribution included in thermographic image data to be included in the shooting region. Thus, for example, even in a case where something resembling the target is present in the shooting region for the visible image, the target has the characteristic temperature distribution that something resembling the target does not have, and therefore it is possible to reduce the possibility of falsely recognizing something resembling the target as the target.

The present application claims the benefit of Japanese Priority Patent Application JP2021-185014 filed with the Japan Patent Office on November 12, 2021, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. An information processing apparatus comprising
a control unit that controls automatic following with respect to a target in a shooting region for a visible image to cause the target located in a position corresponding to a characteristic temperature distribution included in thermographic image data to be included in the shooting region,
the thermographic image data being data obtained by shooting an image in response to a command to start the automatic following.

2. The information processing apparatus according to claim 1, wherein
the control unit controls the automatic following by changing at least one of a direction, an angle of view, or a position of a shooting unit that shoots an image and acquires visible image data.

3. The information processing apparatus according to claim 1, wherein,
when a plurality of the characteristic temperature distributions is included in the thermographic image data, the control unit controls the automatic following to cause a plurality of the targets located in respective positions corresponding to the plurality of the characteristic temperature distributions to be all included in the shooting region.

4. The information processing apparatus according to claim 1, wherein,
when the plurality of the characteristic temperature distributions is included in the thermographic image data, the control unit controls the automatic following to cause images of the plurality of the targets to be shot in an order according to a magnitude relationship between respective temperatures of the plurality of the characteristic temperature distributions.

5. The information processing apparatus according to claim 1, wherein
the control unit controls the automatic following to cause a method for the automatic following to be switched in response to an input of a signal adapted to switch the method for the automatic following.

6. A mobile body comprising
a control unit that controls automatic following with respect to a target in a shooting region for a visible image to cause the target located in a position corresponding to a characteristic temperature distribution included in thermographic image data to be included in the shooting region,
the thermographic image data being data obtained by shooting an image in response to a command to start the automatic following.

7. The mobile body according to claim 6, wherein
the control unit controls the automatic following by changing at least one of a direction, an angle of view, or a position of a shooting unit that shoots an image and acquires visible image data.

8. The mobile body according to claim 7, comprising:
the shooting unit; and
an adjustment unit that adjusts at least one of the direction, the angle of view, or the position of the shooting unit, wherein
the control unit controls the automatic following by controlling the adjustment unit to change at least one of the direction, the angle of view, or the position of the shooting unit.

9. The mobile body according to claim 8, wherein
the adjustment unit includes one or more gimbal mechanisms.

10. The mobile body according to claim 9, wherein
the adjustment unit includes a flying mechanism that changes a spatial position of the mobile body.

11. The mobile body according to claim 6, wherein,
when a plurality of the characteristic temperature distributions is included in the thermographic image data, the control unit controls the automatic following to cause a plurality of the targets located in respective positions corresponding to the plurality of the characteristic temperature distributions to be all included in the shooting region.

12. The mobile body according to claim 6, wherein,
when the plurality of the characteristic temperature distributions is included in the thermographic image data, the control unit controls the automatic following to cause images of the plurality of the targets to be shot in an order according to a magnitude relationship between respective temperatures of the plurality of the characteristic temperature distributions.

13. The mobile body according to claim 6, wherein
the control unit controls the automatic following to cause a method for the automatic following to be switched in response to an input of a signal adapted to switch the method for the automatic following.

14. An information processing method comprising
controlling automatic following with respect to a target in a shooting region for a visible image to cause the target located in a position corresponding to a characteristic temperature distribution included in thermographic image data to be included in the shooting region,
the thermographic image data being data obtained by shooting an image in response to a command to start the automatic following.
